# EUROPEAN PATENT SPECIFICATION

(11) **EP 3 557 662 B1**
(45) Date of publication and mention of the grant of the patent: **21.04.2021**
(21) Application number: 17883476.8
(22) Date of filing: 19.12.2017
(51) Int. Cl.: H01M 4/134, H01M 4/1395, H01M 4/38, H01M 10/052, H01M 10/0566, H01M 4/36, H01M 10/0525, H01M 4/62, H01M 4/02

(54) **NEGATIVE ELECTRODE FOR LITHIUM ION SECONDARY BATTERIES, LITHIUM ION SECONDARY BATTERY, AND METHOD FOR PRODUCING NEGATIVE ELECTRODE FOR LITHIUM ION SECONDARY BATTERIES**
NEGATIVELEKTRODE FÜR LITHIUM-IONEN-SEKUNDÄRBATTERIEN, LITHIUM-IONEN-SEKUNDÄRBATTERIE DAMIT UND VERFAHREN ZUR HERSTELLUNG EINER NEGATIVELEKTRODE FÜR LITHIUM-IONEN-SEKUNDÄRBATTERIEN
ÉLECTRODE NÉGATIVE POUR BATTERIE SECONDAIRE AU LITHIUM-ION, BATTERIE SECONDAIRE AU LITHIUM-ION , ET PROCÉDÉ DE PRODUCTION D'ÉLECTRODE NÉGATIVE POUR BATTERIE SECONDAIRE AU LITHIUM-ION

(30) Priority: 19.12.2016 JP 2016245846
(43) Date of publication of application: 23.10.2019
(73) Proprietor: Kyocera Corporation, Kyoto-shi, Kyoto 612-8501 (JP); Keio University, Tokyo 108-8345 (JP)
(72) Inventor: TERASHI, Yoshitake, Kyoto-shi Kyoto 612-8501 (JP); YAN, Jiwang, Yokohama-shi Kanagawa 223-8522 (JP)
(74) Representative: Viering, Jentschura & Partner mbB Patent- und Rechtsanwälte
(86) International application number: PCT/JP2017/045533
(87) International publication number: WO 2018/117101

(56) References cited:
- CN-A- 101 476 157
- JP-A- 2010 165 508
- JP-A- 2012 033 472
- JP-A- 2014 523 089
- US-A1- 2010 124 706
- US-A1- 2011 294 011
- US-A1- 2012 040 242

## Description

### Field

Embodiments disclosed herein relate to a lithium-ion secondary battery anode, a lithium-ion secondary battery, and a method for producing a lithium-ion secondary battery anode.

### Background

Conventionally, there has been known a lithium-ion secondary battery in which lithium ions in an electrolytic solution move from an anode to a cathode and vice versa. A lithium-ion secondary battery includes an anode active material layer that occludes lithium ions during charge and releases lithium ion during discharge.

An anode active material layer formed using a carbon-based material such as graphite has been broadly employed. In recent years, studies have been made on a lithium-ion secondary battery that includes an anode active material layer formed using a silicon-based material, which has a higher occlusion capability than graphite, so that the battery can have a further increased capacity (for example, see Patent Literature 1). In such a lithium-ion secondary battery, a silicon-based material only is, or materials including a silicon-based material are used to form the anode active material layer.

### Citation List

### Patent Literature

Patent Literature 1: Japanese Patent Application Laid-open No. 2014-191927

### Summary

A lithium-ion secondary battery anode according to an aspect of embodiments includes a current collector and an active material layer. The active material layer disposes on the current collector. The active material layer includes a plurality of needle-shaped bodies that contain silicon. The needle-shaped bodies are fusion-bonded to the current collector.

### Brief Description of Drawings

FIG. 1A is a view schematically illustrating a lithium-ion secondary battery anode according to a first embodiment.
FIG. 1B is a view schematically illustrating the lithium-ion secondary battery anode according to the first embodiment.
FIG. 2 is a view schematically illustrating a method for producing a lithium-ion secondary battery anode according to the first embodiment.
FIG. 3 is a view schematically illustrating a needle-shaped body included in the lithium-ion secondary battery anode according to the first embodiment.
FIG. 4A is a view schematically illustrating a lithium-ion secondary battery anode according to a modification of the first embodiment.
FIG. 4B is a view schematically illustrating the lithium-ion secondary battery anode according to the modification of the first embodiment.
FIG. 5 is a view schematically illustrating a lithium-ion secondary battery according to the first embodiment.
FIG. 6A is a view schematically illustrating a needle-shaped body included in the lithium-ion secondary battery anode according to another modification of the first embodiment.
FIG. 6B is a view schematically illustrating the needle-shaped body included in the lithium-ion secondary battery anode according to still another modification of the first embodiment.
FIG. 6C is a view schematically illustrating the needle-shaped body included in the lithium-ion secondary battery anode according to still another modification of the first embodiment.
FIG. 6D is a view schematically illustrating the needle-shaped body included in the lithium-ion secondary battery anode according to still another modification of the first embodiment.
FIG. 6E is a view schematically illustrating the needle-shaped body included in the lithium-ion secondary battery anode according to the modification of the first embodiment.
FIG. 7 is a view schematically illustrating the lithium-ion secondary battery anode according to the modification of the first embodiment.
FIG. 8 is a flowchart explaining an example of the method for producing a lithium-ion secondary battery anode according to the first embodiment.
FIG. 9 is a view schematically illustrating a lithium-ion secondary battery anode according to a second embodiment.

### Description of Embodiments

Embodiments of a lithium-ion secondary battery anode, a lithium-ion secondary battery, and a method for producing a lithium-ion secondary battery anode disclosed in the present application are described below in detail with reference to the accompanying drawings. The following embodiments are not intended to limit the present invention.

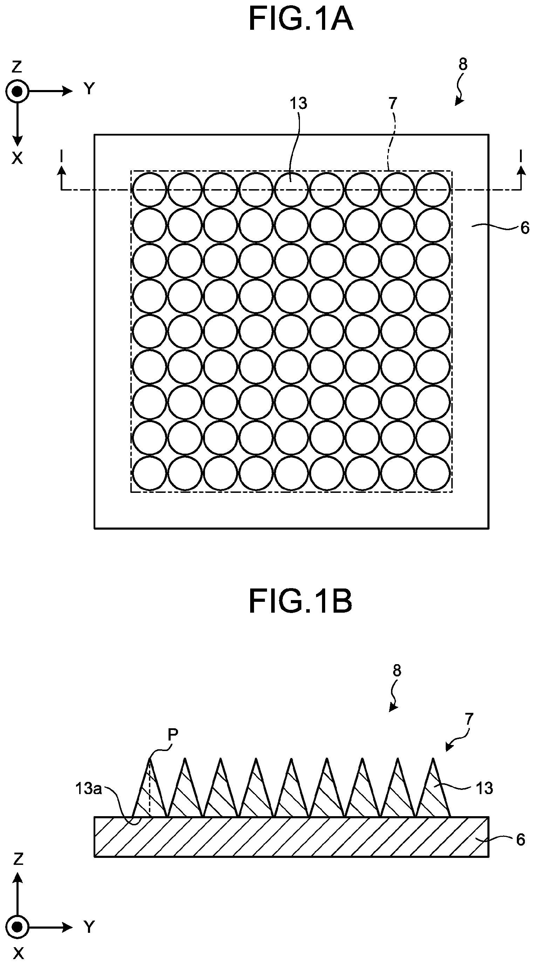

First of all, the configuration of a lithium-ion secondary battery anode according to the first embodiment will be described with reference to FIG. 1A and FIG. 1B. FIG. 1A is a schematic plan view of a lithium-ion secondary battery anode according to the first embodiment, and FIG. 1B is a sectional view taken along the I-I line of FIG. 1A.

The lithium-ion secondary battery anode (hereinafter also referred to as "anode") 8 illustrated in FIG. 1A and FIG. 1B includes an anode current collector (hereinafter also referred to as "current collector") 6 and an anode active material layer (hereinafter also referred to as "active material layer") 7 disposed on the current collector 6.

To facilitate understanding of the description, FIG. 1A and FIG. 1B each have a three-dimensional orthogonal coordinate system illustrated that includes the Z-axis that becomes more positive in the vertically upward direction and more negative in the vertically downward direction. Such an orthogonal coordinate system may be illustrated in some of the other drawings used for explanations given down below.

For example, copper, nickel, titanium, or stainless steel can be used for the current collector 6.

The active material layer 7 includes a plurality of needle-shaped bodies 13 each including an anode active material. Each of the needle-shaped bodies 13 has a conical shape provided upright to the current collector 6 such that a circular bottom surface 13a thereof is attached on the current collector 6. The needle-shaped body 13 has a first end and a second end in longitudinal directions. The term "provided upright" means that respective regions of the circular bottom surfaces 13a, which are the first ends, of the needle-shaped bodies 13 overlap the apexes P, which are the second ends, of the corresponding needle-shaped bodies 13 in the plan view. More specifically, the "conical shape" that the needle-shaped body 13 has is not limited to a right circular cone having the center (not illustrated) of the circular bottom surface 13a at the same position as the apex P of the needle-shaped body 13 in the plan view and may be an oblique circular cone.

In a lithium-ion secondary battery that includes the anode 8 thus configured, lithium ions are occluded into the anode active material included in the needle-shaped bodies 13 during charge. The needle-shaped bodies 13 that are adjacent to each other have the apexes P thereof apart from each other. Thus, even with lithium ions occluded in the anode active material to the full, the needle-shaped bodies 13 are unlikely to experience a structural change such that the adjacent needle-shaped bodies 13 interfere with each other or that the apparent volume of the active material layer 7 changes. It is therefore possible to prevent cycle degradation from occurring in association with such a structural change of the active material layer 7 that is otherwise caused by repeated occlusion and release of lithium ions.

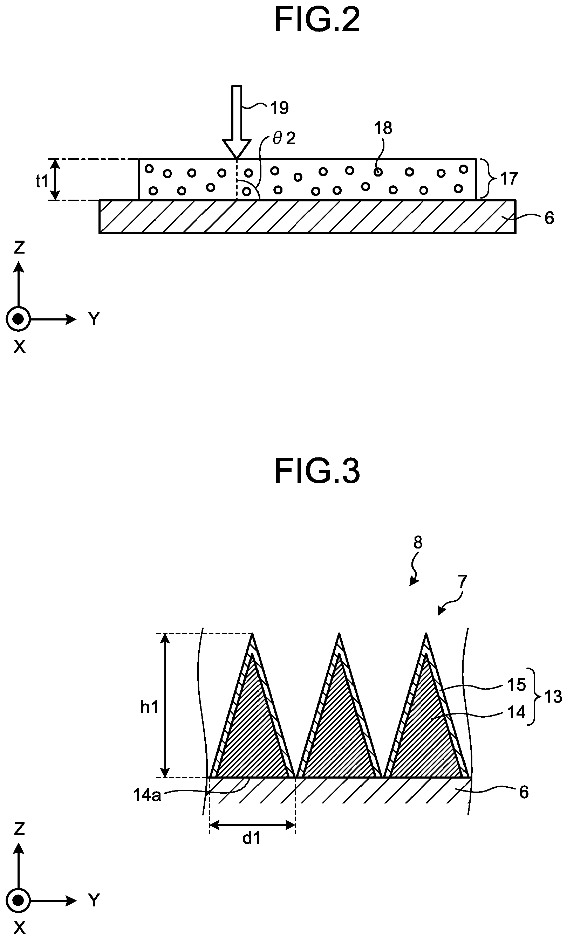

A method for producing the anode 8 is described with reference to FIG. 2. FIG. 2 is a view schematically illustrating the method for producing the anode 8 according to the first embodiment.

The anode 8 (see FIG. 1A and FIG. 1B) can be produced by placing a sheet-like anode material (hereinafter also referred to as "anode sheet") 17 that includes silicon particles 18 and a binder (not illustrated) on the current collector 6 and then irradiating the anode sheet 17 with a laser beam 19 under an atmosphere containing oxygen, for example, in the ambient air. The laser beam 19 is emitted perpendicularly, that is, with an angle of θ2 set to 90 degrees, to the anode sheet 17. Emitting the laser beam 19 in this manner results in formation of the needle-shaped bodies 13 provided upright to the current collector 6, the reason for which is presumed as follows.

More specifically, the silicon particles 18 absorb the laser beam 19 emitted to the anode sheet 17. The silicon particles 18 that have absorbed the laser beam 19 experience a steep rise in temperature thereof, thereby becoming partly melted and partly vaporized. The silicon particles 18 that have become melted in the neighborhood of the current collector 6 work as cores for fusion-bonding to the collector 6. Parts of the silicon particles 18 that have become melted or vaporized around the cores fusion-bonded to the current collector 6 fuse into the cores fusion-bonded to the current collector 6 in such a manner as to be swallowed thereby, and crystals of these parts of the silicon particles 18 grow sequentially along a direction in which laser beam 19 is emitted. Consequently, the active material layer 7 that have the plurality of the needle-shaped bodies 13 fusion-bonded to the current collector 6 is formed on the current collector 6. More specifically, while the active material layer 7 formed on the current collector 6 includes the plurality of needle-shaped bodies 13, the needle-shaped bodies 13 have a fusion-bonded portion, which is directly fuse-bonded to the current collector 6. The binder formed of, for example, an organic gelling agent, is mostly oxidized and vaporized in the course of emission of the laser beam 19. Thus, the main component of the active material layer 7 is silicon that the needle-shaped bodies 13 are made of. Normally, silicon that has melted on the current collector 6 tends to have spherical shape. In the above production method, the silicon particles 18, together with the binder, are irradiated with the laser beam 19. In the presence of the binder or carbon contained in the binder, silicon that has become melted can be fusion-bonded to the current collector 6, and furthermore, crystals of silicon grow sequentially along a direction in which laser beam 19 is emitted.

The silicon particles 18 can have an average particle diameter of, for example, 1 µm to 10 µm inclusive, which is relatively large. A thickness t1 of the anode sheet 17 can be set to, for example, 10 µm to 30 µm inclusive. However, the average particle diameter of the silicon particle 18 and the thickness t1 of the anode sheet 17 are not limited to these ranges, and may be modified as appropriate in accordance with, for example, the beam diameter, the energy amount, and the scanning speed of the laser beam 19, and the shapes of the needle-shaped bodies 13 that need to be prepared.

Then, the needle-shaped bodies 13 included in the active material layer 7 in the anode 8 according to the first embodiment are further described with reference to FIG. 3. FIG. 3 is a view schematically illustrating the needle-shaped bodies 13 included in the anode 8 according to the first embodiment and corresponds to a partial enlarged view of the anode 8 illustrated in FIG. 1B.

The needle-shaped bodies 13 may contain monocrystalline silicon 14 fusion-bonded to the current collector 6. Having bottom surfaces 14a of the monocrystalline silicon 14 fusion-bonded to the current collector 6 allow for smaller contact resistance between the current collector 6 and the active material layer 7 and higher charge and discharge responsiveness than, for example, having the current collector 6 and the active material layer 7 joined together with an insulating adhesive material therebetween. As a result, a lithium-ion secondary battery 1 that includes the anode 8 according to the first embodiment can be charged in less time, for example. Furthermore, having the monocrystalline silicon 14 and the current collector 6 fusion-bonded together without an adhesive material therebetween makes it less likely to have the monocrystalline silicon 14 and the current collector 6 separated from each other along an interface therebetween and consequently makes it possible to prevent cycle degradation from occurring even after repeated charge and discharge.

Each of the needle-shaped bodies 13 may include, in the surface thereof, a covering layer that contains amorphous silicon dioxide 15. The covering layer containing the amorphous silicon dioxide 15 may cover at least a part of the monocrystalline silicon 14. Inclusion in the needle-shaped body 13 of the amorphous silicon dioxide 15 covering the monocrystalline silicon 14 makes it possible to prevent the monocrystalline silicon 14 from being oxidized and experiencing an accompanying structural change. The covering layer that contains the amorphous silicon dioxide 15 is formed by, for example, in such a manner that silicon in the surface of the needle-shaped body 13 is oxidized under an atmosphere containing oxygen.

The amorphous silicon dioxide 15 may have a thickness of 1 nm or more, for example. The amorphous silicon dioxide 15 having a thickness of 1 nm or more makes it possible to prevent oxidization of the monocrystalline silicon 14. The amorphous silicon dioxide 15 may particularly have a thickness of 1 nm to 1 µm inclusive because thickening the amorphous silicon dioxide 15 and consequently reducing the relative content of the monocrystalline silicon 14 in the needle-shaped body 13 reduce the battery capacity. The "monocrystalline silicon 14" and the "amorphous silicon dioxide 15" are observed and measured based on transmission electron microscope (TEM) images for the active material layer 7 that has been sectioned in the thickness direction.

Respective diameters d1 of the bottom surfaces 13a (see FIG. 1B) of the needle-shaped bodies 13 may have an average of 1 µm to 20 µm inclusive and may particularly have an average of 3 µm to 10 µm inclusive. When the diameters d1 have an average of 1 µm or more, the needle-shaped bodies 13 have strength such that no practical problems are present. The needle-shaped bodies 13 thus configured can have higher heights and thus allow for a sufficient battery capacity. This configuration also allows for sufficiently large spaces between the needle-shaped bodies 13 that are adjacent to each other, and thus can reduce the degree to which a volume change of the needle-shaped body 13 due to occlusion of lithium therein affects the entire structure of the active material layer 7. In contrast, when the diameters d1 have an average of 20 µm or less, the active material layer 7 can have a sufficient specific surface area and thus allow for a sufficient battery capacity as compared with when the diameters d1 are larger in the same active material layer 7.

Respective heights h1 of the needle-shaped bodies 13 from a fusion-bonded plane between the current collector 6 and the monocrystalline silicon 14, that is, the bottom surfaces 14a of the monocrystalline silicon 14, may have an average of 100 µm or less, particularly 1 µm to 30 µm inclusive, more particularly 15 µm to 25 µm inclusive. When the heights h1 have an average of 100 µm or less, the lithium-ion secondary battery can have smaller dimensions. Although no lower limit is set on the height h1, the active material layer 7 can have a sufficient specific surface area and thus allow for a sufficient battery capacity when the heights h1 have an average of 1 µm or more. The fusion-bonded plane between the current collector 6 and the monocrystalline silicon 14 means an interface between the current collector 6 and the monocrystalline silicon 14.

The active material layer 7 may have a volume density of 0.8 × 10³ kg/m³ to 1.1 × 10³ kg/m³ inclusive. In a lithium-ion secondary battery provided with the active material layer 7 having a volume density in the above range, a sufficient battery capacity can be secured with cycle degradation prevented from deteriorating charge and discharge performance. The volume density of the active material layer 7 means a value obtained by dividing the mass of the active material layer 7 for a unit area seen from the top view by the average of the heights h1 of the needle-shaped bodies 13.

The "diameters d1" and the "heights h1" of the needle-shaped bodies 13 are observed and measured based on scanning electron microscope (SEM) images for the active material layer 7 that has been sectioned in the thickness direction. Specifically, the active material layer 7 is cracked in the thickness direction along with the current collector 6, the active material layer 7 that has been thus torn is observed along a crack surface with the SEM, and the sizes of fusion-bonded surfaces of the needle-shaped bodies 13 and heights from the fusion-bonded surfaces to the apexes P are measured. The measured sizes of the fusion-bonded surfaces are the "diameters d1" and the measured heights from the fusion-bonded surfaces to the apexes P are the "heights h1". The "mass of the active material layer 7" is obtained, for example, by removing the current collector 6 from the active material layer 7 placed on the current collector 6 and measuring the mass of the active material layer 7 thus obtained.

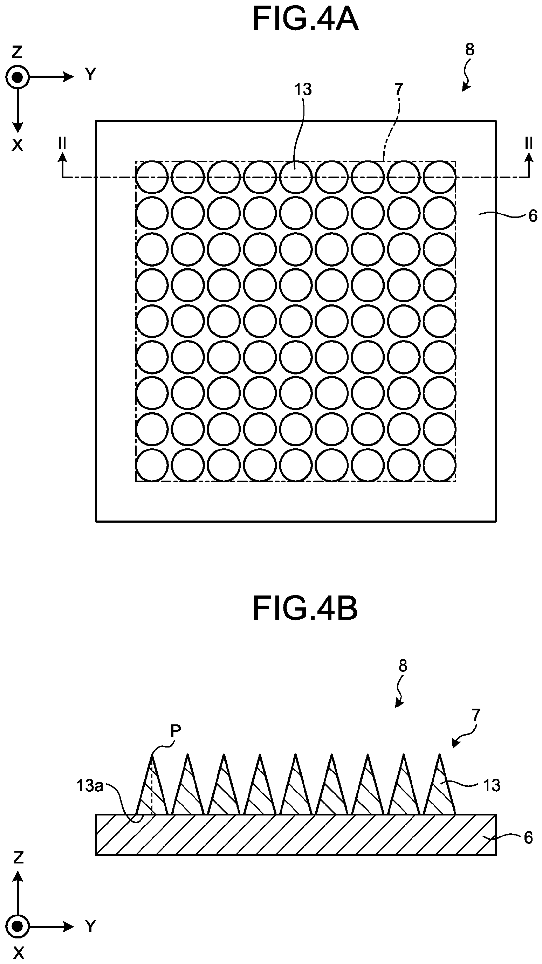

While FIG. 1A illustrates the needle-shaped bodies 13 placed on the current collector 6 as being arrayed in the X-axis direction and in the Y-axis direction, embodiments are not limited thereto, and the needle-shaped bodies 13 may be arranged randomly. The needle-shaped bodies 13 that are adjacent to each other may have outer circumferential portions of the bottom surfaces 13a thereof in contact with each other as illustrated in FIG. 1A and FIG. 1B or apart from each other as illustrated in FIG. 4A and FIG. 4B. These needle-shaped bodies 13 may have, in combination, parts in which the outer circumferential portions of the bottom surfaces 13a thereof are in contact with each other and parts in which the outer circumferential portions of the bottom surfaces 13a are apart from each other. When the needle-shaped bodies 13 that are adjacent to each other have outer circumferential portions of the bottom surfaces 13a thereof apart from each other, interference between the bottom surfaces 13a of the needle-shaped bodies 13 that are adjacent to each other is less likely even with the anode active material having fully occluded lithium ions. It is therefore possible to more effectively prevent cycle degradation from occurring in association with such a structural change of the active material layer 7 that is otherwise caused by repeated occlusion and release of lithium ions.

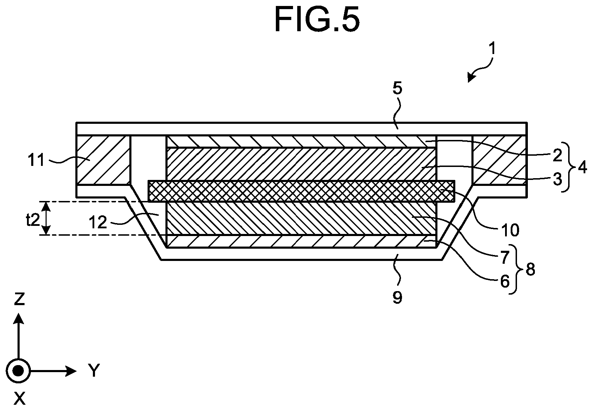

A lithium-ion secondary battery that includes the anode 8 described above is described with reference to FIG. 5. FIG. 5 is a view schematically illustrating the lithium-ion secondary battery according to the first embodiment.

The lithium-ion secondary battery (hereinafter also referred to as "lithium secondary battery") 1 illustrated in FIG. 5 includes a lithium-ion secondary battery cathode (hereinafter also referred to as "cathode") 4, the anode 8, a separator 10, an insulator 11, and an electrolytic solution 12.

The cathode 4 includes a cathode current collector 2 and a cathode active material layer 3. The cathode current collector 2 is electrically connected to a cathode can 5, which doubles as a cathode terminal. For the cathode current collector 2, for example, aluminum can be used.

The cathode active material layer 3 contains a cathode active material. As the cathode active material, at least one selected from the group consisting of lithium-cobalt composite oxide, lithium-manganese composite oxide, lithium-nickel composite oxide, lithium-nickel-cobalt composite oxide, and lithium-vanadium composite oxide can be used. The cathode active material layer 3 may contain a conductive additive or another additive as appropriate.

The anode 8 includes the current collector 6 and the active material layer 7. The anode 8 is an electrode that has a lower potential than the cathode 4. The current collector 6 is electrically connected to an anode can 9, which doubles as an anode terminal. The active material layer 7 is positioned between the current collector 6 and the separator 10 and contains an active material. The active material layer 7 may contain not only the needle-shaped bodies 13 but also an electrolyte such as an electrolytic solution 12 between the needle-shaped bodies 13. The active material layer 7 may have a thickness t2 not less than the maximum of the heights h1 of the needle-shaped bodies 13 and, for example, can have a thickness of 100 µm or less, more particularly 1 µm to 30 µm inclusive. When the active material layer 7 and the separator 10 are in contact with each other as illustrated in FIG. 5, the thickness t2 of the active material layer 7 may be deemed as the distance between the current collector 6 and the separator 10.

The separator 10 is disposed between the cathode 4 and the anode 8, thus defining the cathode 4 and the anode 8. For example, non-woven cloth made of organic resin fibers or inorganic fibers, a ceramic porous material, or a polyolefin such as polypropylene or polyethylene can be usable for the separator 10.

The insulator 11 is disposed between the cathode can 5 and the anode can 9, thereby not only preventing short circuit between the cathode can 5 and the anode can 9 but also preventing leakage of the electrolytic solution 12 enclosed inside. For example, an electrolytic-solution resistant insulating material, polypropylene, or fluorine-based materials such as fluororesin or fluororubber can be used for the insulator 11.

The electrolytic solution 12 is a non-aqueous electrolytic solution that includes an organic solvent and a lithium salt, which serves as the source of lithium ions, and that has fluidity. For example, one kind or a mixture of two or more kinds selected from a group consisting of ethylene carbonate, propylene carbonate, butylene carbonate, γ-butyrolactone, sulfolane, 1,2-dimethoxyethane, 1,3-dimethoxypropane, dimethyl ether, tetrahydrofuran, 2-methyl tetrahydrofuran, methyl ethyl carbonate, dimethyl carbonate, and diethyl carbonate can be used for the organic solvent. The organic solvent has high permittivity, low viscosity, and low vapor pressure.

For example, LiClO₄, LiBF₄, LiPF₆, LiCF₃SO₃, LiN(CF₃SO₂)₂, or LiN(C₂F₅SO₂)₂ can be used as the lithium salt. The electrolytic solution 12 may contain an additive that can enhance the performance of the lithium secondary battery 1 in such a manner as to prevent overcharge or to impart flame resistance according to the need.

The lithium secondary battery 1 may have any shape such as a rectangular, circular cylinder, button-type, coin-type, or flattened shape according to the intended use. The lithium secondary battery 1 may include, instead of the cathode can 5 and the anode can 9, an insulating container that includes a cathode terminal and an anode terminal. Furthermore, the electrode structure of the lithium secondary battery 1 is not limited to a single-layer structure, which includes only one pair of the cathode 4 and the anode 8, and may be a multi-layer structure, which includes a plurality of pairs of the cathodes 4 and the anodes 8.

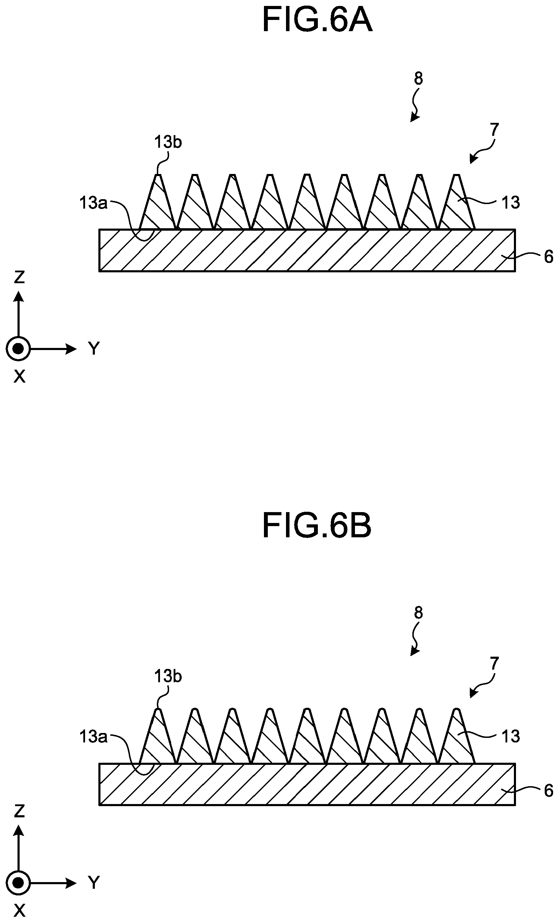

While each of the needle-shaped bodies 13 is described as having a conical shape in the above embodiment, the embodiments are not limited thereto. This point is described with reference to FIG. 6A and FIG. 6B.

FIG. 6A and FIG. 6B are views schematically illustrating the needle-shaped bodies 13 included in the anode 8 according to modifications of the first embodiment. The same components as those described above are assigned the same reference numerals, and descriptions thereof are omitted.

The needle-shaped bodies 13 illustrated in FIG. 6A are different from the needle-shaped bodies 13 illustrated in FIG. 1B in that they have truncated conical shapes with circular and planar top surfaces 13b that are parallel to the bottom surfaces 13a on the second end. The needle-shaped bodies 13 illustrated in FIG. 6B are different from the needle-shaped bodies 13 illustrated in FIG. 6A in that the top surfaces 13b are not planar but curved.

The needle-shaped bodies 13 that are adjacent to each other have the top surfaces 13b thereof apart from each other, making it less likely that the active material layer 7 experiences a volume change even after fully occluding lithium ions. Thus, also according to a lithium secondary battery 1 with the anode 8 including the needle-shaped bodies 13 illustrated in FIG. 6A and FIG. 6B, charge and discharge performance can be prevented from deteriorating in association with cycle degradation as in the case of the lithium secondary battery 1 with the anode 8 including the needle-shaped bodies 13 having conical shapes. While FIG. 6A and FIG. 6B illustrate examples in which the outer circumferential portions of the bottom surfaces 13a are in contact with each other, these modifications may have the outer circumferential portions of the bottom surfaces 13a apart from each other as illustrated in FIG. 4B, or may have, in combination, parts in which the outer circumferential portions of the bottom surfaces 13a are in contact with each other and parts in which the outer circumferential portions of the bottom surfaces 13a are apart from each other.

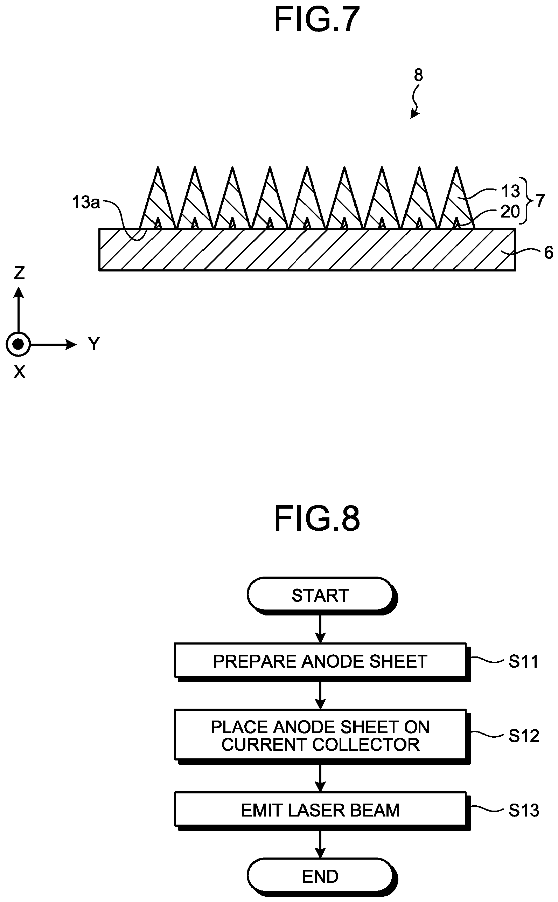

While the needle-shaped bodies 13 are described in the above embodiment as being disposed on the current collector 6, the embodiments are not limited thereto. This point is described with reference to FIG. 7.

FIG. 7 is a view schematically illustrating the anode 8 according to another modification of the first embodiment. The anode 8 illustrated in FIG. 7 has the same configuration as the anode 8 according to the first embodiment except that the active material layer 7 further includes conductive pillars 20.

The conductive pillars 20 each have a conical shape, the bottom surface of which is on the current collector 6. The conductive pillars 20 are made of a highly conductive metal material such as copper, aluminum, and gold and are welded to or formed integrally with the current collector 6. The needle-shaped bodies 13 are provided in such a manner as to cover the conductive pillars 20 and the needle-shaped bodies 13 have the same outer contours as the needle-shaped bodies 13 illustrated in FIG. 1B.

With the lithium secondary battery 1 that includes, in the needle-shaped bodies 13, the anode 8 having the conductive pillars 20 embedded therein, between which and the current collector 6 electrical conduction is established, charge and discharge performance can be prevented from deteriorating in association with cycle degradation while the contact resistance between the current collector 6 and the active material layer 7 can be reduced. Thus, still higher charge and discharge responsiveness can be brought about. While FIG. 7 illustrates a case in which the conductive pillars 20 are positioned at the centers of the corresponding bottom surfaces 13a, the conductive pillars 20 may be offset from the centers of the corresponding bottom surfaces 13a. The conductive pillars 20 may be at different relative positions with respect to the corresponding needle-shaped bodies 13 on the bottom faces 13a thereof.

Then, the method for producing the anode 8 according to the first embodiment is described in detail with reference to FIG. 8. FIG. 8 is a flowchart explaining the processing procedure for producing the anode 8 according to the first embodiment.

As illustrated in FIG. 8, first of all, an anode sheet 17 that includes the silicon particles 18 and the binder is prepared (not illustrated) (Step S11). The anode sheet 17 may contain carbon particles.

Subsequently, the anode sheet 17 is placed on the current collector 6 (Step S12), and the anode sheet 17 on the current collector 6 is irradiated with the laser beam 19 under an atmosphere containing oxygen (Step S13). Production of the anode 8 according to the first embodiment is completed through the above steps.

While the embodiments of the present invention are described above, the present invention is not limited to the above embodiments and various changes can be made thereto insofar as they do not depart from the spirit of the present invention.

For example, while Step S12 is described as being a different step from Step S11 in the above embodiment, the embodiments are not limited thereto, and Steps S11 and S12 may be integrated as one step. More specifically, the anode sheet 17 placed on the current collector 6 may be prepared by coating the current collector 6 with an anode material that contains the silicon particles 18 and the binder.

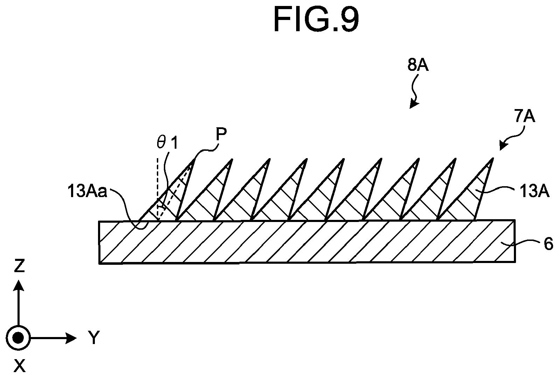

While the needle-shaped bodies 13 are described in the above embodiment as being provided upright to the current collector 6, the embodiments are not limited thereto. This point is described with reference to FIG. 9.

FIG. 9 is a view schematically illustrating the anode according to the second embodiment. An anode 8A illustrated in FIG. 9 has the same configuration as the anode 8 illustrated in FIG. 1B except that needle-shaped bodies 13A provided obliquely to the current collector 6 are included instead of the needle-shaped bodies 13.

The term "provided obliquely" means that respective regions of the circular bottom surfaces 13Aa, which are the first ends, of the needle-shaped bodies 13A do not overlap the apexes P, which are the second ends, of the corresponding needle-shaped bodies 13A in the plan view. More specifically, the "conical shape" that the needle-shaped body 13A has is an oblique circular cone.

In order to prepare the needle-shaped bodies 13A provided obliquely to the current collector 6, the laser beam 19, which is supposed to be emitted to the anode sheet 17 illustrated in FIG. 2 at the angle θ2 = 90 degrees, is emitted at a desired angle oblique therefrom with the angle θ2 < 90 degrees, whereby the needle-shaped bodies 13A provided obliquely by an angle θ1 as compared with the needle-shaped bodies 13 that are provided upright to the current collector 6 can be obtained. In this case, the irradiation angle θ2 of the laser beam 19 to the anode sheet 17 is preferably set to 10 degrees or more and less than 90 degrees from a practical perspective. θ1 is roughly a value obtained by subtracting θ2 from 90 degrees. While the degrees θ1 of the needle-shaped bodies 13A provided obliquely are illustrated in FIG. 9 as being uniform, the degrees θ1 may be different insofar as the directions in which the needle-shaped bodies 13A are provided obliquely are roughly uniform.

The needle-shaped bodies 13A included in the anode 8A thus configured have a larger specific surface area than the needle-shaped bodies 13 provided upright to the current collector 6. Thus, according to the anode 8A that includes the needle-shaped bodies 13A provided obliquely to the current collector 6, the battery capacity can be further increased while charge and discharge performance can be prevented from deteriorating in association with cycle degradation of the lithium secondary battery 1. Each of the anodes 8 and 8A may include, in combination, the needle-shaped bodies 13 provided upright and the needle-shaped bodies 13A provided obliquely. The anode 8 is defined as a case in which the needle-shaped bodies 13 that are provided upright account for 50 mass% or more of the entire active material contained therein; and the anode 8A is defined as a case in which the needle-shaped bodies 13A that are provided obliquely account for 50 mass% or more of the entire active material contained therein.

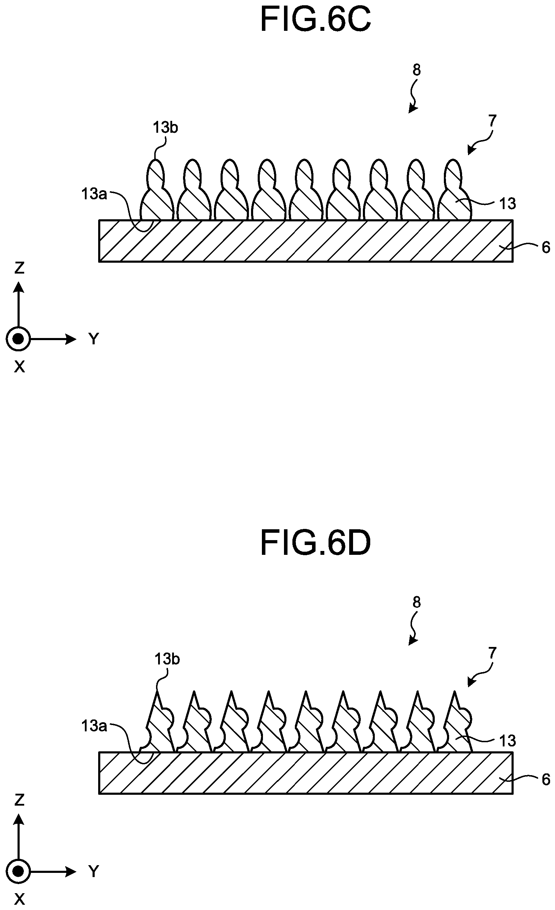

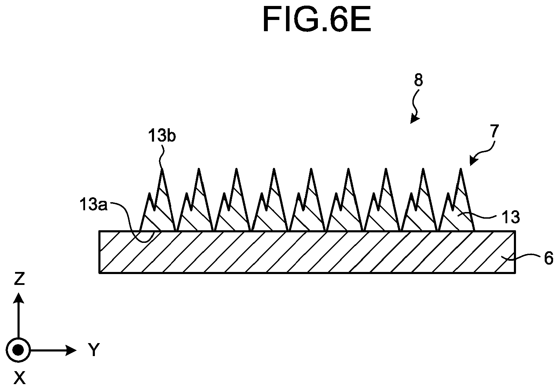

While the bottom surfaces 13a and 13Aa of the needle-shaped bodies 13 and 13A are described as having a circular shape in the above embodiments, the embodiments are not limited thereto, and the bottom surfaces 13a and 13Aa may have an elliptic shape, a polygonal shape, or indefinite shape, for example. In such a case, an equivalent circle diameter can be used as the diameter d1 of each of the bottom surfaces. The needle-shaped bodies 13 and 13A may each have any shape such that a sectional area cut along an XY plane has the maximum value at the corresponding bottom surface 13a or 13Aa and is smaller at any other section toward the apex P or the top surface 13b than at the corresponding bottom surface 13a or 13Aa. For example, the needle-shaped bodies 13 and 13A may have irregularities on lateral surfaces thereof positioned between the first end and the second end (see FIG. 6C and FIG. 6D). The needle-shaped bodies 13 and 13A may each include two or more apexes P formed with respect to each of the bottom surfaces 13a and 13Aa (see FIG. 6E). Each of the anodes 8 and 8A may include an active material having a structure different from the one that includes the needle-shaped bodies 13 or 13A. For example, each of the anodes 8 and 8A may include an active material such that an active material part that has not been fuse-bonded to the current collector 6 or that has the maximum sectional area along a section other than the bottom surfaces 13a and 13Aa where the active material is fuse-bonded to the current collector 6 may account for 10 mass% or less of the entire active material.

While the diameters d1 and the heights h1 of the needle-shaped bodies 13 are illustrated as being uniform diameters and uniform heights in the above embodiments, there may be differences among diameters or among heights. For any of the needle-shaped bodies 13 that has two or more apexes P, one of the heights of the apexes P that is the largest is defined as the height h1.

While the needle-shaped bodies 13 are described in the above embodiments as containing the monocrystalline silicon 14 fusion-bonded to the current collector 6, the embodiments are not limited thereto. The presence of the crystalline nature of silicon contained in the needle-shaped bodies 13 does not matter insofar as the needle-shaped bodies 13 contain silicon and is fusion-bonded to the current collector 6. The needle-shaped body 13 may, for example, contain amorphous silicon in place of the monocrystalline silicon 14 or in addition to the monocrystalline silicon 14. When the needle-shaped body 13 contains amorphous silicon and does not contain the monocrystalline silicon 14, the amorphous silicon and the current collector 6 may be fusion-bonded together. In this case also, charge and discharge responsiveness can be improved while cycle degradation of the lithium battery 1 can be presented.

### Examples

### (Example 1)

### Preparation of Anode Coating Solution

An anode coating solution having a solid content of 65% is prepared by mixing 75 mass% of silicon powder (with an average particle diameter of 5 µm and a purity of 99.9 mass%), 10 mass% of a conductive additive (acetylene black), 15 mass% of a binder (polyvinylidene fluoride (PVDF)) together with a solvent (N-methylpyrrolidone (NMP)) and stirring.

### Preparation of Anode Sheet

A copper foil (corresponding to the "current collector 6") of 40 mm × 35 mm × 30 µm was coated with an anode coating solution, the anode sheet 17 of 30 mm × 35 mm × 15 µm was prepared.

### Irradiation with Laser Beam (Preparation of Anode)

The laser beam 19 was irradiated with the anode sheet 17, whereby the anode 8 was prepared that includes the active material layer 7 including the plurality of needle-shaped bodies 13. Irradiation conditions for the laser beam 19 are provided in Table 1. The laser beam 19 is linearly reciprocated a certain number of times on the anode sheet 17, The laser beam 19 is configured to travel through slightly different passages on the anode sheet 17 between when going forth and when coming back, the entire anode sheet 17 was scanned with the laser beam 19. A line pitch is the distance between a position through which the center of the laser beam 19 passes when going forth and a position through which the center of the laser beam 19 passes when going back. The anode 8 was assessed after materials such as silicon particles that have not been fusion-bonded to the current collector 6 are removed. The average of the diameters d1 and the average of the heights h1 of the needle-shaped bodies 13 that were prepared, and the volume density of the active material layer 7 are provided in Table 2. The following descriptions may refer to the average of d1 simply as d1 and refer to the average of h1 simply as h1.

**[Table 1]**

| | |
|---|---|
| Laser Medium | Nd:YAG |
| Wavelength | 532 nm |
| Pulse Width | 15.4 ns |
| Beam Quality | TEMoo |
| Beam Radius | 42.5 µm |
| Repetition Frequency | 10 kHz |
| Laser Fluence | 2500 mJ/cm² |
| Scanning Speed | 5 mm/s |
| Line Pitch | 57 µm |
| Irradiation Angle (θ2) | 90° |
| Atmosphere | Ambient air |

### Preparation of Charge and Discharge Experimental Cell (Half Cell)

The separator 10 was stacked on the anode 8 thus prepared, and the counter electrode was further stacked on the separator 10, whereby one half cell was obtained. In the same manner, another half cell was obtained. Those two half cells were connected in series, and the connected two half cells were housed together with the electrolytic solution 12 in an aluminum laminate film. An experimental cell was thus prepared. Polyethylene having a thickness of 20 µm was used as the separator 10 and a lithium foil having a thickness of 30 µm was used as the counter electrode. The electrolytic solution 12 was obtained by dissolving LiPF₆ at a concentration of 1 M into a solvent obtained by mixing ethylene carbonate and diethyl carbonate with a volume ratio of 1:1.

### Charge and Discharge Test

HJ1001SD8 manufactured by Hokuto Denko Corporation was used as a charge and discharge device. In one cycle, the cell was charged with constant current of 800 mA/g until the charge voltage reached 1500 mV, and discharged with constant current of 800 mA/g until the discharge voltage reaches 5 mV. With intervals of 10 minutes, 300 cycles were repeated. Charge and discharge capacities (initial capacities) after the first cycle, and charge and discharge capacities and capacity retentions after the first 100 cycles and the first 300 cycles are provided all together in Table 2.

### (Example 2)

Except that the laser fluence was changed to 1752 mJ/cm², the anode 8 and the experimental cell were prepared in the same manner as Example 1 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test.

### (Example 3)

Except that the laser fluence was changed to 1410 mJ/cm², the anode 8 and the experimental cell were prepared in the same manner as Example 1 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test.

### (Example 4)

Except that the line pitch was changed to 42.5 µm, the anode 8 and the experimental cell were prepared in the same manner as Example 3 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test.

### (Example 5)

Except that the laser fluence was changed to 1750 mJ/cm², that the scanning speed was changed to 1 mm/s, and that the line pitch was changed to 40 µm, the anode 8 and the experimental cell were prepared in the same manner as Example 1 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test.

### (Example 6)

Except that the laser fluence was changed to 1500 mJ/cm² and that the scanning speed was changed to 6 mm/s, the anode 8 and the experimental cell were prepared in the same manner as Example 5 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test. In Examples 1 to 6, all of the needle-shaped bodies 13 that were in the ranges observed with the SEM were provided upright.

### (Example 7)

Except that the irradiation angle (θ2) was changed to 60 degrees, the anode 8 and the experimental cell were prepared in the same manner as Example 1 and a charge and discharge test was conducted. The diameter d1 and the height h1 of the needle-shaped bodies 13 in the obtained anode 8, and the volume density of the active material layer 7 therein are provided in Table 2 along with the results of the charge and discharge test. In Example 7, the needle-shaped bodies 13 tilted in a direction in which the laser beam 19 was emitted. As a result of SEM observation, the tilted needle-shaped bodies 13 included the needle-shaped bodies 13 provided obliquely and the needle-shaped bodies 13 provided upright. The needle-shaped bodies 13 provided obliquely outnumbered the needle-shaped bodies 13 provided upright. The average of θ1 was about 30 degrees.

### (Comparative Example 1)

Except that irradiation with laser was not performed, the anode 8 and the experimental cell were prepared in the same manner as Example 1 and a charge and discharge test was conducted. The volume density of the active material layer 7 in the obtained anode 8 is provided in Table 2 along with the results of the charge and discharge test.

**[Table 2]**

| | d1 (µm) | h1 (µm) | Volume Density (10³ kg/m³) | Initial capacity (mAh/g) | After 100 cycles | | After 300 cycles | |
|---|---|---|---|---|---|---|---|---|
| | | | | | Capacity (mAh/g) | Capacity retention rate (%) | Capacity (mAh/g) | Capacity retention rate (%) |
| Example 1 | 10 | 22 | 0.790 | 1450 | 1070 | 74 | 790 | 54 |
| Example 2 | 8 | 21 | 0.995 | 1500 | 1400 | 93 | 350 | 23 |
| Example 3 | 7 | 20 | 0.993 | 1500 | 1500 | 100 | 600 | 40 |
| Example 4 | 7 | 20 | 0.991 | 1500 | 1500 | 100 | 800 | 53 |
| Example 5 | 12 | 30 | 0.770 | 1500 | 1500 | 100 | 400 | 27 |
| Example 6 | 5 | 1 | 0.999 | 1300 | 1300 | 100 | 1150 | 88 |
| Example 7 | 8 | 8 | 1.098 | 1500 | 1500 | 100 | 1425 | 95 |
| Comparative Example 1 | - | - | 1.200 | 1500 | 1000 | 67 | 100 | 7 |

## Claims

1. A lithium-ion secondary battery anode comprising:
a current collector; and
an active material layer disposed on the current collector, wherein
the active material layer includes a plurality of needle-shaped bodies that contain silicon, and
the needle-shaped bodies are fusion-bonded to the current collector.

2. The lithium-ion secondary battery anode according to claim 1, wherein heights of the needle-shaped bodies from a fusion-bonded plane between the current collector and the needle-shaped bodies have an average of 100 µm or less.

3. The lithium-ion secondary battery anode according to claim 1 or 2, wherein
each of the needle-shaped bodies includes a covering layer that contains amorphous silicon dioxide, and
the covering layer covers at least a part of the silicon.

4. The lithium-ion secondary battery anode according to any one of claims 1 to 3, wherein the silicon contains monocrystalline silicon.

5. The lithium-ion secondary battery anode according to any one of claims 1 to 4, wherein the silicon contains amorphous silicon.

6. The lithium-ion secondary battery anode according to any one of claims 1 to 5, wherein the active material layer has a volume density of 0.8 × 10³ kg/m³ to 1.1 × 10³ kg/m³ inclusive.

7. The lithium-ion secondary battery anode according to any one of claims 1 to 6, wherein the needle-shaped bodies are provided upright to the current collector.

8. The lithium-ion secondary battery anode according to any one of claims 1 to 6, wherein the needle-shaped bodies are provided obliquely to the current collector.

9. A lithium-ion secondary battery comprising a cathode and an anode facing each other across an electrolytic solution containing lithium ions, wherein
the anode is the lithium-ion secondary battery anode according to any one of claims 1 to 8.

10. A method for producing the lithium-ion secondary battery anode according to any one of claims 1 to 8, the method comprising:
placing, on the current collector, a sheet-like anode material that contains silicon particles and a binder, and
irradiating the anode material with a laser beam under an atmosphere containing oxygen.

11. The method for producing the lithium-ion secondary battery anode according to claim 10, wherein the laser beam is emitted at an angle of 10 degrees to 90 degrees inclusive to the sheet-like anode material.

## Patentansprüche

1. Lithium-Ionen-Sekundärbatterie-Anode, aufweisend:
einen Stromkollektor und
eine aktives-Material-Schicht, die auf dem Stromkollektor angeordnet ist, wobei
die aktives-Material-Schicht eine Mehrzahl von nadelförmigen Körpern aufweist, die Silicium enthalten, und
die nadelförmigen Körper mit dem Stromkollektor schmelzverbunden sind.

2. Lithium-Ionen-Sekundärbatterie-Anode gemäß Anspruch 1, wobei Höhen der nadelförmigen Körper von einer Schmelzverbindungsebene zwischen dem Stromkollektor und den nadelförmigen Körpern aus einen Durchschnitt von 100 µm oder weniger haben.

3. Lithium-Ionen-Sekundärbatterie-Anode gemäß Anspruch 1 oder 2, wobei
jeder der nadelförmigen Körper eine Deckschicht aufweist, die amorphes Siliciumdioxid enthält, und
die Deckschicht zumindest einen Teil des Siliciums bedeckt.

4. Lithium-Ionen-Sekundärbatterie-Anode gemäß irgendeinem der Ansprüche 1 bis 3, wobei das Silicium monokristallines Silicium enthält.

5. Lithium-Ionen-Sekundärbatterie-Anode gemäß irgendeinem der Ansprüche 1 bis 4, wobei das Silicium amorphes Silicium enthält.

6. Lithium-Ionen-Sekundärbatterie-Anode gemäß irgendeinem der Ansprüche 1 bis 5, wobei die aktives-Material-Schicht eine Volumendichte von 0,8 x 10³ kg/m³ bis einschließlich 1,1 x 10³ kg/m³ hat.

7. Lithium-Ionen-Sekundärbatterie-Anode gemäß irgendeinem der Ansprüche 1 bis 6, wobei die nadelförmigen Körper aufrecht zum Stromabnehmer vorgesehen sind.

8. Lithium-Ionen-Sekundärbatterie-Anode gemäß irgendeinem der Ansprüche 1 bis 6, wobei die nadelförmigen Körper schräg zum Stromkollektor vorgesehen sind.

9. Lithium-Ionen-Sekundärbatterie, aufweisend eine Kathode und eine Anode, die einander über eine Lithium-Ionen enthaltende Elektrolytlösung zugewandt sind, wobei
die Anode die Lithium-Ionen-Sekundärbatterie-Anode gemäß irgendeinem der Ansprüche 1 bis 8 ist.

10. Verfahren zum Herstellen der Lithium-Ionen-Sekundärbatterie-Anode gemäß irgendeinem der Ansprüche 1 bis 8, wobei das Verfahren aufweist:
Platzieren, auf dem Stromkollektor, eines blattförmigen Anodenmaterials, das Siliciumpartikel und ein Bindemittel enthält, und
Bestrahlen des Anodenmaterials mit einem Laserstrahl unter einer sauerstoffhaltigen Atmosphäre.

11. Verfahren zum Herstellen der Lithium-Ionen-Sekundärbatterie-Anode gemäß Anspruch 10, wobei der Laserstrahl in einem Winkel von 10 Grad bis einschließlich 90 Grad auf das blattförmige Anodenmaterial emittiert wird.

## Revendications

1. Une anode de batterie secondaire au lithium-ion, comprenant :
un collecteur de courant ; et
une couche de matière active disposée sur le collecteur de courant, dans laquelle
la couche de matière active comprend une pluralité de corps en forme d'aiguille qui contiennent du silicium, et
les corps en forme d'aiguille sont liés par fusion au collecteur de courant.

2. L'anode de batterie secondaire au lithium-ion selon la revendication 1, dans laquelle des hauteurs des corps en forme d'aiguille à partir d'un plan lié par fusion entre le collecteur de courant et les corps en forme d'aiguille ont une moyenne de 100 µm ou moins.

3. L'anode de batterie secondaire au lithium-ion selon la revendication 1 ou 2, dans laquelle
chacun des corps en forme d'aiguille comprend une couche de couverture qui contient du dioxyde de silicium amorphe, et
la couche de couverture recouvre au moins une partie du silicium.

4. L'anode de batterie secondaire au lithium-ion selon l'une quelconque des revendications 1 à 3, dans laquelle le silicium contient du silicium monocristallin.

5. L'anode de batterie secondaire au lithium-ion selon l'une quelconque des revendications 1 à 4, dans laquelle le silicium contient du silicium amorphe.

6. L'anode de batterie secondaire au lithium-ion selon l'une quelconque des revendications 1 à 5, dans laquelle la couche de matière active a une densité volumique de 0,8 x 10³ kg/m³ à 1,1 x 10³ kg/m³ inclus.

7. L'anode de batterie secondaire au lithium-ion selon l'une quelconque des revendications 1 à 6, dans laquelle les corps en forme d'aiguille sont disposés verticalement par rapport au collecteur de courant.

8. L'anode de batterie secondaire au lithium-ion selon l'une quelconque des revendications 1 à 6, dans laquelle les corps en forme d'aiguille sont disposés obliquement par rapport au collecteur de courant.

9. Une batterie secondaire au lithium-ion comprenant une cathode et une anode se faisant face à travers une solution électrolytique contenant des ions lithium, dans laquelle
l'anode est l'anode de batterie secondaire au lithium-ion selon l'une quelconque des revendications 1 à 8.

10. Un procédé de production de l'anode de batterie secondaire au lithium-ion selon l'une quelconque des revendications 1 à 8, le procédé comprenant les étapes suivantes consistant à :
placer, sur le collecteur de courant, un matériau d'anode en forme de feuille qui contient des particules de silicium et un liant, et
irradier le matériau d'anode avec un faisceau laser sous une atmosphère contenant de l'oxygène.

11. Le procédé de production de l'anode de batterie secondaire au lithium-ion selon la revendication 10, dans lequel le faisceau laser est émis à un angle de 10 degrés à 90 degrés inclus sur le matériau d'anode en feuille.
